# EUROPÄISCHE PATENTANMELDUNG

(11) **EP 0 963 097 A1**
(43) Veröffentlichungstag der Anmeldung: **08.12.1999**
(21) Anmeldenummer: 99110572.7
(22) Anmeldetag: 01.06.1999
(51) Int. Cl.: H04M 17/00, H04M 17/02

(54) **Kommunikationsendgerät zur wahlweisen Aufnahme und Auswertung von Wertkarten oder Münzen**

(30) Priorität: 05.06.1998 DE 19825219
(71) Anmelder: SIEMENS AKTIENGESELLSCHAFT, 80333 München (DE)
(72) Erfinder: Brandstetter, Alfred, 82140 Olching (DE); Schowanek, Emil, 82152 Planegg (DE)

(57) **Zusammenfassung**

Aus einem Wertkartenfernsprecher (1, 2, 9) und einem ihm zugeordneten Münzmodul (3) bestehendes Kommunikationsendgerät. Bei einem derartigen Gerät soll eine Einrichtung vorgesehen werden, mittels der eine Übertragung von Geldbeträgen auf eine Geldkarte möglich ist.
Dies erfolgt dadurch, daß in dem Münzmodul (3) ein Eingabe- und Anzeigesystem vorgesehen ist, das ein Übertragen von Geldbeträgen auf eine Geldkarte durch Eingabe von personenbezogenen Daten ermöglicht.

## Beschreibung

Die vorliegende Erfindung betrifft ein aus einem Wertkartenfernsprecher und einem ihm zugeordneten Münzmodel bestehendes Kommunikationsendgerät.

Bei einem vorgeschlagenen Gerät dieser Art besteht das Kommunikationsendgerät aus einem handelsüblichen Wertkartenfernsprecher sowie einem separaten Münzmodul, das mit dem Wertkartenfernsprecher mechanisch und elektrisch verbunden ist. Dabei ist der Wertkartenfernsprecher außermittig auf dem Münzmodul angeordnet, wobei im frei zugänglichen Bereich des Münzmoduls der Münzeinwurf und die Münzrückgabe angeordnet sind.

Das Münzmodul selbst ist als zweiteiliges Gehäuse gestaltet, dessen Gehäuseteile über Scharniere miteinander verbunden und durch einen im Gehäuseinneren angeordneten, elektrisch wirkenden Schließmechanismus versperrt sind. Der Schließmechanismus kann nur durch Einhaltung mehrerer Sicherheitsmaßnahmen (spezielle, PIN-gesicherte Servicekarte, kryptografisch gesicherte Verbindung, Zusammenarbeit mit einem Hintergrundsystem) kurzfristig zum Wechsel der Münzkassette geöffnet werden.

Im Gehäuseinneren sind zusätzlich zur Münzkassette ein Münzprüf- und Leitsystem sowie ein Belegdrucker angeordnet, mittels dem auf Anforderung ein Ausdruck über die Gesprächskosten erstellt werden kann, wobei dieser Ausdruck über die Münzrückgabe ausgegeben wird.

Bei einem derartigen Kommunikationsendgerät besteht auch der Wunsch, bei öffentlich zugänglichen Fernsprechgeräten Geldbeträge über das Gerät auf eine Geldkarte zu übertragen.

Aufgabe der vorliegenden Erfindung ist es daher, eine Vorrichtung in einem Kommunikationsendgerät aufzuzeigen, mittels der eine derartige Übertragung von Geldbeträgen auf eine Geldkarte ermöglicht wird.

Gemäß der Erfindung wird diese Aufgabe dadurch gelöst, daß in dem Münzmodul ein Eingabe- und Anzeigesystem vorgesehen ist, das ein Übertragen von Geldbeträgen auf eine Geldkarte durch Eingabe von personenbezogenen Daten ermöglicht.

Durch Vorsehen eines solchen Systems in dem Münzmodul lassen sich nunmehr Geldbeträge z. B. von dem Konto des Benutzers auf eine eingebrachte Geldkarte umbuchen, d. h. die Geldkarte wird um einen vorgegebenen Geldbetrag wieder aufgestockt.

Um bei diesem Vorgang Manipulationen an dem z. B. aus einer Tastatur und einem Display bestehenden Eingabe- und Anzeigesystem weitgehend auszuschließen, müssen Sicherungsmaßnahmen getroffen werden, wie sie z. B. bei Geldautomaten von Geldinstituten zum Einsatz gelangen. So können die Sicherungsmaßnahmen aus personenbezogenen Sicherungsdaten bestehen, die wiederum aus verschlüsselten, PIN-gesicherten Kenndaten gebildet werden. Ferner muß gewährleistet sein, daß auch die Eingabe dieser Kenndaten abhörgesichert ist.

Eine weitere Sicherungsmaßnahme kann darin bestehen, daß das Eingabe- und Anzeigesystem sichtgeschützt in das Münzmodul integriert ist. Dadurch wird auch bei der Eingabe der Kenndaten ein unerwünschtes Ausspähen verhindert. Dieser Sichtschutz kann z. B. durch eine vertiefte Anordnung des Systems im Gehäuse oder durch im Bereich des Eingabe- und Anzeigesystems angebrachte Blenden realisiert werden.

Die Erfindung soll im folgenden anhand von Ausführungsbeispielen näher erläutert werden.

Es zeigt jeweils in perspektivischer Ansicht
Figur 1 eine erste Ausführungsform eines auf ein separates Münzmodul angeordneten Wertkartenfernsprechers,
Figur 2 eine zweite Ausführungsform eines mit einem separaten Münzmodul verbundenen Wertkartenfernsprechers,
Figur 3 eine dritte Ausführungsform eines mit einem separaten Münzmodul verbundenen Wertkartenfernsprechers.

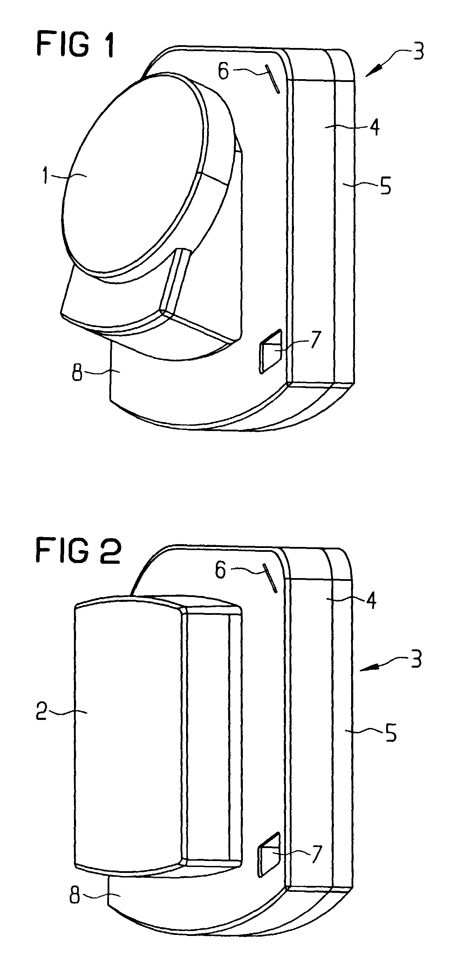

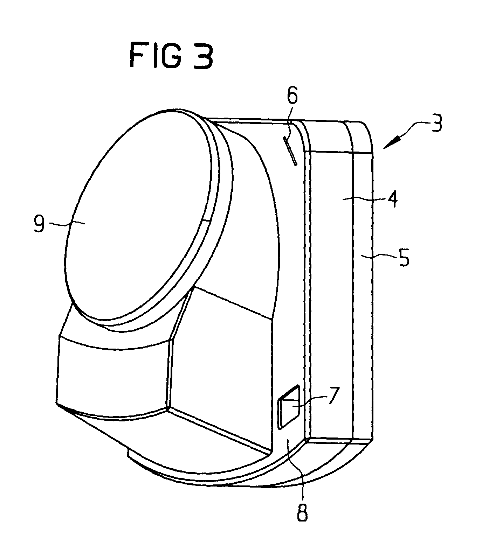

Bei den vorliegenden Anordnungen soll bei einem Wertkartenfernsprecher die Möglichkeit geschaffen werden, zum Telefonieren neben der Wertkarte auch Münzen zu verwenden. Zu diesem Zweck sind den in den Figuren 1, 2 und 3 dargestellten Wertkartenfernsprechern 1, 2 und 9 jeweils das gleiche Münzmodul 3 zugeordnet. Diese beiden jeweils kombinierten Geräte 1 und 3 bzw. 2 und 3 bzw. 9 und 3 sind miteinander elektrisch und mechanisch verbunden.

Das Münzmodul 3 ist als separates Bauteil gestaltet und besteht aus den beiden Gehäuseteilen 4 und 5, die zu Wartungs- und Montagezwecken bzw. zum Kassettenwechsel über hier nicht näher dargestellte Scharniere schwenkbar verbunden sind. Beide Gehäuseteile 4 und 5 sind im geschlossenen Zustand durch ein von außen nicht zugängliches, nur elektrisch betätigbares Schloß miteinander verriegelt.

Die drei Wertkartenfernsprecher sind in den Ausführungsbeispielen nur angedeutet, ohne Details wie Kartenaufnahme, Hörer und Anschlußschnur, Sondertasten, Display usw. näher zu zeigen. Die Wertkartenfernsprecher 1, 2 und 9 sind jeweils außermittig auf dem Münzmodul 3 befestigt, da durch diese Plazierung auf der in der Bildebene rechts befindlichen Vorderfront 8 des Gehäuseteils 4 hinreichend Platz zur Verfügung steht, um den als Schlitz gestalteten Münzeinwurf 6 sowie die Münzrückgabe 7 vorzusehen. Durch eine derartige Anordnung der Wertkartenfernsprecher 1, 2 und 9 sowie Münzeinwurf 6 und Münzrückgabe 7 wird dem Benutzer signalisiert, daß er dieses öffentliche Kommunikationsendgerät wahlweise mit Münzen oder Wertkarten betreiben kann.

Innerhalb des Münzmoduls 3 können Vorrichtungen zur elektronischen Prüfung und Weiterleitung von Münzen sowie eine Münzkassette vorgesehen werden.

Das Münzmodul 3 dient weiterhin zur Aufnahme eines Belegdruckers, der jeweils auf Anforderung des Benutzers einen Ausdruck über die Gesprächskosten erstellt. Der erstellte Ausdruck wird über die Münzrückgabeöffnung 7 an den Benutzer ausgegeben.

Weiterhin ist in dem Münzmodul 3 ein als Tastatur und Display gestaltetes Eingabe- und Anzeigesystem angeordnet, das durch Eingabe von personenbezogenen Daten ein Übertragen von Geldbeträgen auf Geldkarten ermöglicht. Diese personenbezogenen Daten können aus verschlüsselten, PIN-gesicherten Kenndaten gebildet sein, wobei die Eingabe der Kenndaten abhörgesichert ist. Weiterhin kann um das Eingabe- und Anzeigesystem ein Sichtschutz in Form von sie umschließenden Blenden angeordnet sein.

## Patentansprüche

1. Aus einem Wertkartenfernsprecher (1, 2, 9) und einem ihm zugeordneten Münzmodul (3) bestehendes Kommunikationsendgerät, **dadurch gekennzeichnet,** daß in dem Münzmodul (3) ein Eingabe- und Anzeigesystem vorgesehen ist, das ein Übertragen von Geldbeträgen auf eine Geldkarte durch Eingabe von personenbezogenen Daten ermöglicht.

2. Kommunikationsendgerät nach Anspruch 1, **dadurch gekennzeichnet,** daß das Eingabe- und Anzeigesystem durch eine Tastatur sowie ein ihr zugeordnetes Display gebildet ist.

3. Kommunikationsendgerät nach Anspruch 1, **dadurch gekennzeichnet,** daß die personenbezogenen Daten aus verschlüsselten, PIN-gesicherten Kenndaten gebildet sind, wobei die Eingabe dieser Kenndaten abhörgesichert ist.

4. Kommunikationsendgerät nach Anspruch 1, **dadurch gekennzeichnet,** daß das Eingabe- und Anzeigesystem sichtgeschützt angeordnet ist.

5. Kommunikationsendgerät nach Anspruch 4, **dadurch gekennzeichnet,** daß der Sichtschutz durch das Eingabe- und Anzeigesystem umschließende Blenden gebildet ist.
